# EUROPÄISCHE PATENTSCHRIFT

(11) **EP 4 592 548 B1**
(45) Veröffentlichungstag und Bekanntmachung des Hinweises auf die Patenterteilung: **22.07.2026**
(21) Anmeldenummer: 24219680.6
(22) Anmeldetag: 13.12.2024
(51) Int. Cl.: F16D 65/10, F16D 65/02

(54) **TROMMELBREMSE**
DRUM BRAKE
FREIN À TAMBOUR

(30) Priorität: 25.01.2024 DE 102024102093
(43) Veröffentlichungstag der Anmeldung: 30.07.2025
(73) Patentinhaber: KNORR-BREMSE Systeme für Nutzfahrzeuge GmbH, 80809 München (DE)
(72) Erfinder: Weber, Ralf, 80997 München (DE); Iraschko, Johann, 85301 Schweitenkirchen (DE); Buch, Andreas, 82024 Taufkirchen (DE); Schröpf, Frederic, 94469 Deggendorf (DE); Rguichi, Abdelaziz, 82140 Olching (DE); Stöger, Christian, 94486 Osterhofen (DE); Markl, Michael, 94508 Schöllnach (DE); Fischer, Rudolf, 85435 Erding (DE)

(56) Entgegenhaltungen:
- CN-A- 111 923 875
- DE-A1- 10 221 455
- DE-A1- 102018 106 297
- US-A- 2 026 263
- US-A1- 2012 118 684

## Beschreibung

Die Erfindung betrifft eine Trommelbremse gemäß dem Oberbegriff des Anspruchs 1.

Trommelbremsen weisen generell einen zylindertrommelförmigen Rotor auf, mit einer Innenseite des auch als Bremstrommel bezeichneten Rotors angeordneten Reibflächen. Eine Bremskraft wird dabei mit Bremsbelägen generiert, die gegen die innenliegende Reibfläche der Bremstrommel gedrückt werden.

DE 102 21 455 A1 offenbart eine Radnabe eines Kraftfahrzeuges mit einem daran zu befestigenden Reibkörper, der zum tribologischen Zusammenwirken mit zugehörigen Bremsbelägen einer Reibungsbremse vorgesehen ist.

Nach heutigem Stand der Technik wird bei Trommelbremsen für Nutzfahrzeuge die Bremstrommel auf Radbolzen aufgesteckt, die in die Nabe rotationsgesichert eingepresst werden. Dabei liegt ein mit Durchgangslöchern für die Radbolzen versehener Bremstrommelflansch plan an der Gegenfläche eines Nabenflansches der Nabe an.

Anschließend wird die Radfelge eines Rades des Nutzfahrzeugs auf die Radbolzen gesteckt, so dass wiederum deren, mit Durchgangslöchern für die Radbolzen versehene Flanschfläche an der außenliegenden Flanschfläche des Bremstrommelflansches anliegt.

Die Flanschflächen werden anschließend mittels Radmuttern verspannt, so dass die im Fahrbetrieb eingeleiteten Bremskräfte über diese Schnittstelle übertragen werden.

Diese Verbindung ist in mehrerlei Hinsicht nachteilig.

Zum einen erfordert diese Verbindung einen relativ großen Einbauraum, da sich die Flanschstärken von Nabe, Bremstrommel und Felge addieren.

Zum anderen kann die Krafteinleitung durch die Bremsbeläge auf die Bremstrommel zu einer Schirmung der Bremstrommel führen, da durch die Verschraubung mittels Radbolzen und Radmutter die Bremstrommel an den Verbindungstellen fixiert ist. Die Kraftwirkung der Bremsbeläge wirkt jedoch radial auf die Bremstrommel und hat zur Flanschfläche in axialer Richtung einen Versatz, dessen Hebelarm die Kraft auf die Flanschverbindung verstärkt. Die Schirmung der Bremstrommel wirkt sich negativ auf die Reibpaarung Bremstrommel/Bremsbelag aus, da aufgrund der Schirmung keine gleichmäßige Flächenpressung vorliegt, sondern mit steigender Bremskraft eine Linienberührung der Reibpartner eintritt.

Aufgabe der vorliegenden Erfindung ist es, eine gattungsgemäße Trommelbremse mit verbesserter Verbindung zwischen Bremstrommelflansch und Nabenflansch bereitzustellen.

Die gestellte Aufgabe wird durch eine Trommelbremse mit den Merkmalen des Anspruchs 1 gelöst.

Die erfindungsgemäße Trommelbremse, insbesondere für ein Nutzfahrzeug, weist eine an einer Fahrzeugachse des Nutzfahrzeugs befestigbare Nabe auf sowie eine an der Nabe koaxial zu einer Rotationsachse der Nabe gelagerte Bremstrommel.

Die Trommelbremse weist weiter wenigstens zwei in einem Aufnahmeraum der Bremstrommel gelagerte Bremsbeläge auf, die an eine als Reibfläche ausgebildete Mantelinnenfläche der Bremstrommel anpressbar sind.

Die Nabe weist eine zylindrische Achsaufnahme und eine sich von dieser radial erstreckenden Nabenflansch auf, an dem ein Bremstrommelflansch der Bremstrommel dreh- und axialfest gelagert ist.

Der Nabenflansch und der Bremstrommelflansch weisen eine formschlüssig ineinander greifende Verzahnung auf.

Die Anbindung mittels einer Verzahnung als Schnittstelle zwischen Bremstrommel und Nabe bietet die Möglichkeit, das Bremsmoment nicht mittels Kraft-/Reibschluss, sondern mittels Formschluss zu übertragen und spart einen Großteil des Bauraums ein, den ansonsten die Flanschstärke der Bremstrommel einnimmt.

Durch den Wegfall des Anschraubflanschs der Bremstrommel wird eine kompaktere Bauweise der Trommelbremse in axialer Richtung erreicht.

Darüber hinaus wird dadurch auch eine Reduzierung des Trommelbremsengewichts ermöglicht.

Vorteilhafte Ausführungsvarianten der Erfindung sind Gegenstand der Unteransprüche.

Gemäß einer vorteilhaften Ausführungsvariante weisen der Nabenflansch und der Bremstrommelflansch sich radial zur Rotationsachse der Nabe erstreckende Zähne auf.

Nach einer weiteren vorteilhaften Ausführungsvariante sind einander gegenüberliegende Seitenflanken der einzelnen Zähne des Bremstrommelflansches oder des Nabenflansches parallel zueinander ausgerichtet.

Gemäß einer weiteren Ausführungsvariante sind axial zur Rotationsachse der Nabe betrachtete Materialstärken des Bremstrommelflansches und des Nabenflansches gleich.

Dadurch ist eine zuverlässige Abstützung der ineinander greifenden Zähne ermöglicht.

Zwischen Seitenflanken der Zähne des Bremstrommelflansches und Seitenflanken der Zähne des Nabenflansches sind nach einer weiteren vorteilhaften Ausführungsvariante Dämpfungselemente eingesetzt.

Bevorzugt weisen die Dämpfungselemente jeweils ein federndes Element und ein plastisch verformbares Element auf.

Die verformbaren Elemente sind nach einer bevorzugten Weiterbildung der Erfindung parallel zu den Seitenflanken der Zähne verlaufend an parallel zu den Seitenflanken der Zähne verlaufenden ersten Bereichen der federnden Elemente befestigt.

Dies ermöglicht insbesondere eine NVH-Reduzierung (NVH = Noise Vibration Harshness), da die Dämpfungselemente den Klangkörper Bremstrommel von der Nabe entkoppeln und dessen Schwingung dämpfen.

Gemäß einer weiteren Ausführungsvariante weist jedes der federnden Elemente zwei parallel zu den Seitenflanken der Zähne des Bremstrommelflansches verlaufende erste Bereiche und einen die beiden erste Bereiche miteinander verbindenden Verbindungssteg auf.

Jedes der federnden Elemente weist gemäß einer bevorzugten Weiterbildung an den freien Enden ersten Bereiche eine federnde Lasche auf.

Dadurch ist ein Toleranzausgleich der Schnittstelle Bremstrommel zu Nabe in Umfangsrichtung und in axialer Richtung ermöglicht.

Weiter sind bevorzugt an den Seitenflanken der Zähne des Bremstrommelflansches abgewandten Außenseiten der ersten Bereiche Haltenasen vorgesehen sind, die in jeweiligen Aussparungen des Nabenflansches eingreifen.

Um eine Beschädigung der Felge zu vermeiden, ist gemäß einer weiteren Ausführungsvariante zwischen dem Bremstrommelflansch und dem Nabenflansch ein Distanzring angeordnet, so dass an der den Nabenflansch zugewandten Seite des Felgenflansches eine plane Fläche geschaffen ist.

Um eine einfache Demontage der Nabe von der Bremstrommel zu ermöglichen, weist nach einer weiteren vorteilhaften Ausführungsvariante der Erfindung wenigstens ein Zahn des Bremstrommelflansches eine mit einem Gewinde versehene, sich in einer Richtung parallel zur Rotationsachse der Nabe erstreckende Durchgangsbohrung auf, in die ein Abzugsbolzen eindrehbar ist.

Nachfolgend werden bevorzugte Ausführungsbeispiele anhand der beiliegenden Zeichnungen näher erläutert. Es zeigen:
- Fig. 1: eine schematische isometrische Ansicht einer Ausführungsvariante einer erfindungsgemäßen Trommelbremse,
- Fig. 2: eine schematische Schnittansicht der in Fig. 1 gezeigten Trommelbremse, aufgenommen in einer Felge eines Fahrzeugrades,
- Fig. 3: die in Fig. 2 gezeigte Schnittansicht ohne Felge,
- Fig. 4: eine Draufsicht auf die Trommelbremse mit Darstellung der ineinandergreifenden Verzahnung,
- Fig. 5: eine schematische Schnittansicht durch eine in Fig. 4 mit V bezeichnete Schnittebene,
- Fig. 6a: eine isometrische Darstellung eines Dämpfungselements,
- Fig. 6b: eine Seitenansicht des in Fig. 6a) gezeigten Dämpfungselements,
- Fig. 7: eine Draufsicht auf eine alternative Ausführungsvariante eines Dämpfungselements,
- Fig. 8: eine Seitenschnittansicht durch eine in Fig. 7 mit VII bezeichnete Schnittebene auf das in Fig. 7 gezeigte Dämpfungselement,
- Fig. 9: eine schematische isometrische Ansicht der Trommelbremse gemäß Figur 1 zu Beginn des Fügeprozesses Bremstrommel auf Nabe,
- Fig. 10: eine schematische isometrische Ansicht der Trommelbremse gemäß Figur 1 am Ende des Fügeprozesses Bremstrommel auf Nabe,
- Fig. 11: eine Draufsicht auf die Trommelbremse mit Darstellung der aufgesetzten Felge,
- Fig. 12: eine schematische Schnittansicht durch die Trommelbremse mit Darstellung der aufgesetzten Felge durch die in Fig. 4 mit V bezeichnete Schnittebene,
- Fig. 13: eine schematische isometrische Ansicht der Trommelbremse gemäß Figur 1 am Ende des Demontageprozesses Bremstrommel von Nabe,
- Fig. 14: eine Schnittansicht eines Teilstücks der Nabe mit Darstellung der Aussparung zur Aufnahme einer Haltenase des Dämpfers,
- Fig. 15: eine Seitenansicht der Nabe mit Darstellung der Zähne, Taschen und Aussparung zur Aufnahme einer Haltenase des Dämpfers,
- Fig. 16: eine Draufsicht auf die Bremstrommel mit Darstellung der Zähne und in diese eingebrachte Bohrung zur Aufnahme der Abzugsbolzen,
- Fig. 17: eine schematische Schnittansicht durch eine in Fig. 16 mit XVII bezeichnete Schnittebene,
- Fig. 18: eine Draufsicht auf eine alternative Ausführungsvariante einer Nabe mit v-förmigen Taschen zur Aufnahme v-förmiger Zähne des Bremstrommelflansches, und
- Fig. 19: eine Draufsicht auf eine alternative Ausführungsvariante einer Bremstrommel mit zu den v-förmigen Taschen des Nabenflansches passenden v-förmigen Zähnen des Bremstrommelflansches.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Trommelbremse, der Bremstrommel, der Nabe, des Bremstrommel- und Nabenflansches, der Druckstempel und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

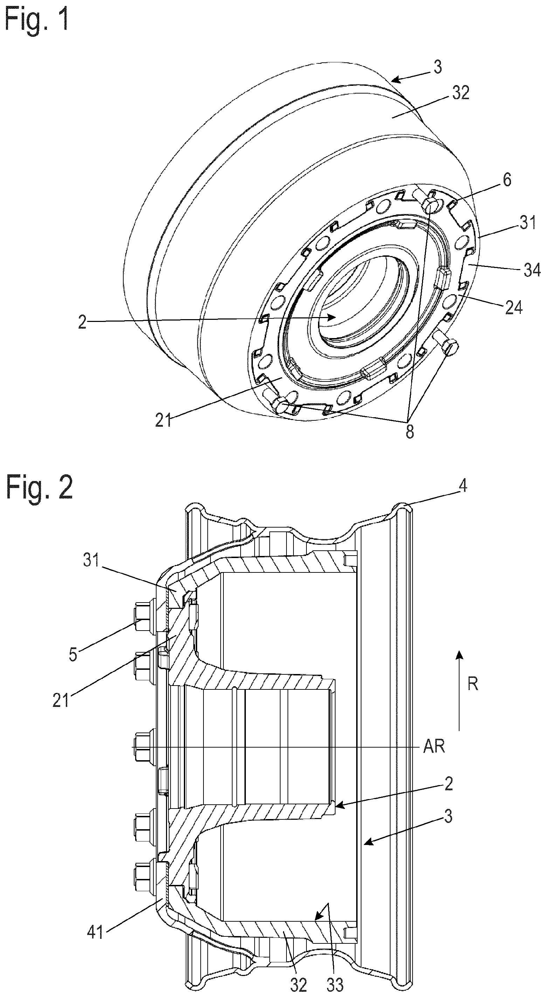

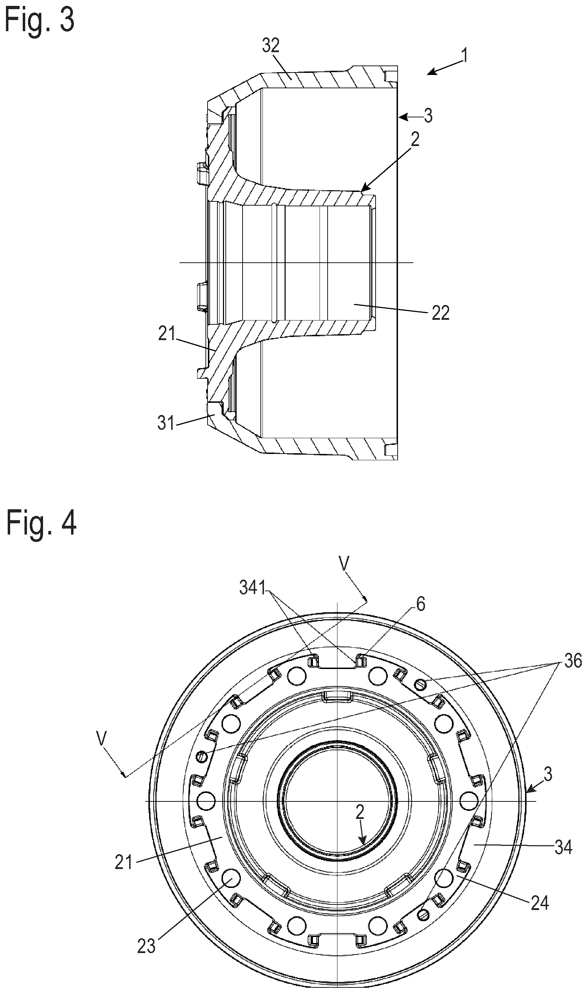

In den **Figuren 1** **und** **3** ist mit dem Bezugszeichen 1 insgesamt eine Ausführungsvariante einer erfindungsgemäßen Trommelbremse, insbesondere für den Einsatz an einem Nutzfahrzeug, bezeichnet.

Die Trommelbremse 1 weist eine an einer Fahrzeugachse des Nutzfahrzeugs befestigbare Nabe 2 und eine an der Nabe 2 koaxial zu einer Rotationsachse AR der Nabe 2 gelagerte Bremstrommel 3 mit einer als Reibfläche ausgebildeten Mantelinnenfläche 33 auf, an die hier nicht dargestellt Bremsbeläge anpressbar sind.

Die Nabe 2 weist, wie in **Figur** 3 gezeigt ist, eine zylindrische Achsaufnahme 22 und einen sich von dieser radial erstreckenden Nabenflansch 21 auf, an dem ein Bremstrommelflansch 31 der Bremstrommel 3 dreh- und axialfest gelagert ist.

Wie weiter in Figur 1 und in **Figur 4** zu erkennen ist, weisen der Nabenflansch 21 und der Bremstrommelflansch 31 eine formschlüssig ineinandergreifende Verzahnung auf.

Der Nabenflansch 21 und der Bremstrommelflansch 31 weisen dazu bevorzugt sich radial zur Rotationsachse AR der Nabe 2 erstreckende Zähne 24, 34 auf, wie es in Figur 1 und in Figur 4 dargestellt ist.

Dadurch ist eine Anbindung der Bremstrommel 3 an die Nabe 2 mit einer Schnittstelle bereitgestellt, bei der das Bremsmoment durch eine formschlüssige Verbindung übertragen wird.

Die Verzahnung zwischen Bremstrommel 3 und Nabe 2 ist bevorzugt derart ausgeführt, dass die Bremstrommel 3 bei steigender Bauteiltemperatur einen Freiheitsgrad parallel zum Radius der Bremstrommel 3 aufweist.

Einander gegenüberliegende Seitenflanken 241, 341 der einzelnen Zähne 24, 34 des Nabenflansches 21 und des Bremstrommelflansches 31 sind bevorzugt parallel zueinander ausgerichtet.

Die als Berührflächen der Verzahnung in Nabe 2 und Bremstrommel 3 dienenden Seitenflanken 241, 341 haben an jeder der Seitenflanken 241, 341 einen definierten Abstand zur Gegenfläche im anderen Bauteil.

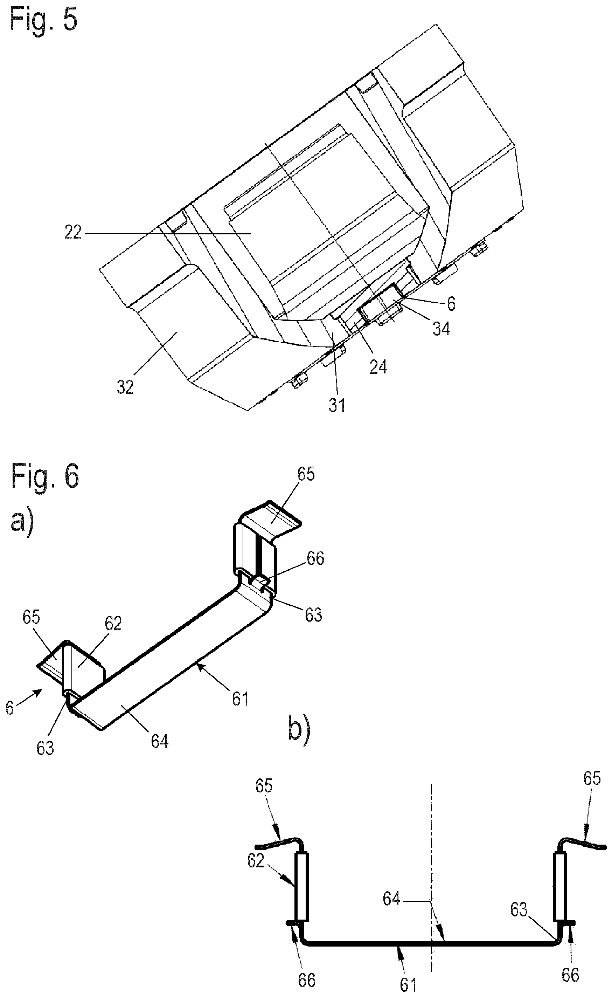

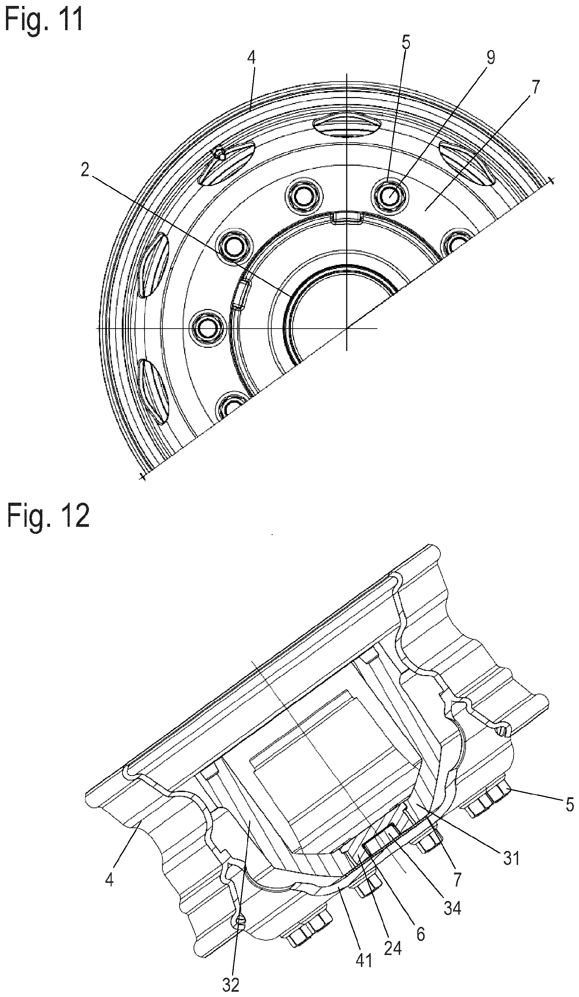

Dieser Abstand wird durch ein Dämpfungselement 6 gefüllt, wie es beispielhaft in den **Figuren 5****,** **12** **und** **13** gezeigt ist.

Eine erste bevorzugte Ausführungsvariante von Dämpfungselementen 6 ist in den **Figuren 6a) und 6b****)** gezeigt. Bei dieser Ausführungsvariante wird jeweils ein Dämpfungselement 6 um einen Zahn 34 der Bremstrommel 3 gelegt. Denkbar ist jedoch auch, jeweils ein Dämpfungselement 6 um einen Zahn 24 der Nabe 2 zu legen.

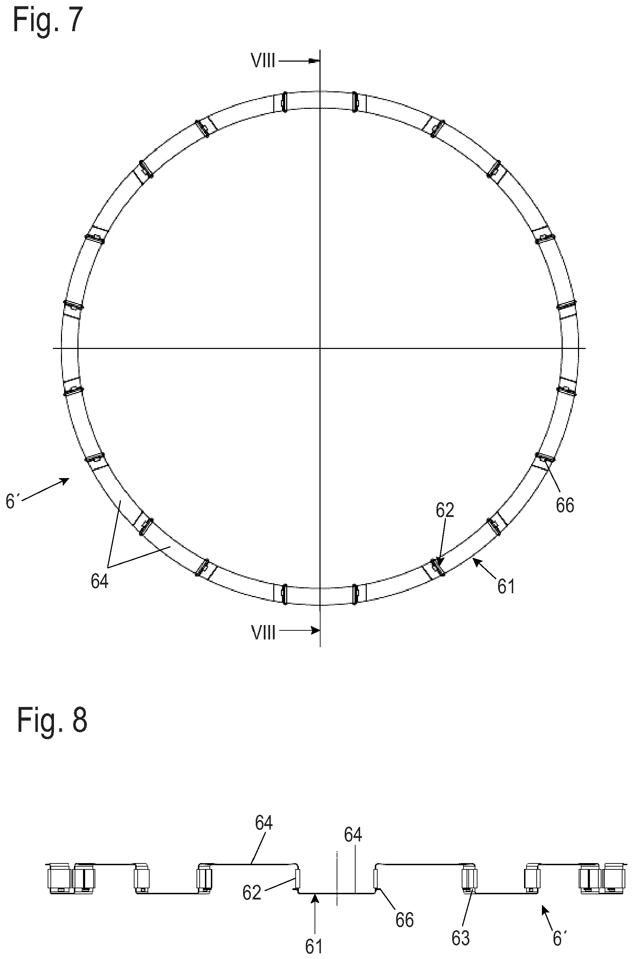

Eine zweite bevorzugte Ausführungsvariante eines ringförmigen Dämpfungselements 6' ist in den **Figuren 7 und 8** gezeigt, auf das weiter unten noch näher eingegangen wird.

Bei beiden Ausführungsvarianten sind die Dämpfungselemente 6, 6' bevorzugt zweiteilig aus federnden Elementen 61 und plastisch verformbaren Elementen 62 gebildet.

Das federnde Element 61 bestehen bevorzugt aus einem Federstahl.

Das verformbare Element 62 ist fest mit den zu den Seitenflanken 241, 341 der Zähne 24, 34 parallel verlaufenden ersten Bereichen 63 der federnden Elementen 61 befestigt. Dies kann formschlüssig durch Bördeln, durch Schweißen, oder auch Pressen in eine Hinterschneidung geschehen.

Jedes der federnden Elemente 61 weist zudem zwei parallel zu den Seitenflanken 241, 341 der Zähne 24, 34 des Bremstrommelflansches 31 verlaufende erste Bereiche 63 und einen die beiden erste Bereiche 63 miteinander verbindenden Verbindungssteg 64 auf.

Die verformbaren Elemente 62 bestehen vorzugsweise aus einem weichen Stahl (z.B. DC01). Aus fertigungstechnischen Gründen ist eine passgenaue Herstellung der Verzahnung sehr schwierig. Je nach Fertigungsverfahren ist neben den Breitentoleranzen des Zahns 24, 34 und dessen Gegenkontur mit relativen großen Positionsabweichungen zwischen den einzelnen Zähnen 24, 34 und als Taschen 25, 35 ausgeführten Zahnlücken zur rechnen.

Die verformbaren Elemente 62 ermöglichen einen Toleranzausgleich, indem der weiche Stahl beim Fügen der Bremstrommel 3 mit der Nabe 2 stark plastifiziert werden kann.

Mit dieser Eigenschaft erfüllt das Dämpfungselement 6 zwei Funktionen.

Zum einen gleicht es die Toleranzen der Fügekontur aus, zum andern gewährleistet es als Brückenglied einen Materialkontakt zwischen der Bremstrommel 3 und der Nabe 2.

Die vorzugsweise parallel zum Radius der Bremstrommel 3 verlaufenden Seitenflanken 341 der Zähne 34 der Bremstrommel 3 ermöglichen bei Erwärmung der Bremstrommel 3 eine Gleitbewegung parallel zu den Flanken 241 der Zähne 24 der Nabe 2 aus.

Diese Reibstelle wirkt sich positiv auf ein NVH (Noise-Vibration-Harshness)-Verhalten der Bremstrommel 3 aus. Die an dieser Schnittstelle entstehende Reibung dämpft außerdem die Schallausbreitung der Bremstrommel 3, die in ihrer grundsätzlichen geometrischen Form einen großen Klangkörper darstellt.

Jedes der vorzugsweise aus Federstahl gefertigten federnden Elemente 61 des Dämpfungselementes 6 übernimmt folgende Funktionen:
In axialer Richtung begrenzt es die Position der Bremstrommel 3. Dabei ist wichtig, dass ein in axialer Richtung verbleibender Spalt zwischen Nabe 2 und der Brücke des Dämpfungselementes 6 so groß ist, dass bei verschraubter Felge 4 ein minimaler Restspalt besteht, der größer sein muss als die Wärmeausdehnung der Bremstrommel 3 bei maximaler Temperatur.

Dieser Restspalt fungiert als Toleranzausgleich in axialer Richtung, damit die Bremstrommel 3 nicht zwischen Nabe 2 und Felge 4 verspannt wird, was die Parallelverschiebung, die zur NVH-Minderung dient, verhindern würde.

Außerdem würde die Felge 4 Schaden nehmen, wenn die Verzahnungsgeometrie sich an der Flanschfläche der Felge 4 abbilden würde.

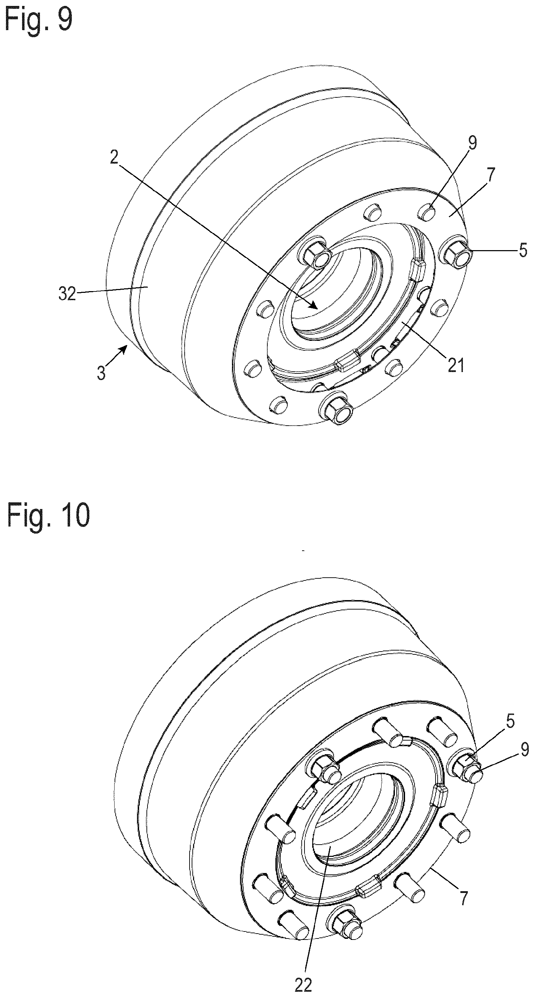

Um dies zu verhindern und eine plane Anlagefläche zu gewährleisten, ist nach einer bevorzugten Ausführungsvariante ein in den **Figuren 9, 10** und 12 gezeigter Distanzring 7 vorgesehen, der zwischen dem Bremstrommelflansch 31 und dem Nabenflansch 21 eingesetzt ist.

Die Federarme des Dämpfungselementes 6 sorgen dafür, dass die Bremstrommel 3 immer in Richtung des Distanzrings 7 bzw. der Felge 4 gezogen wird.

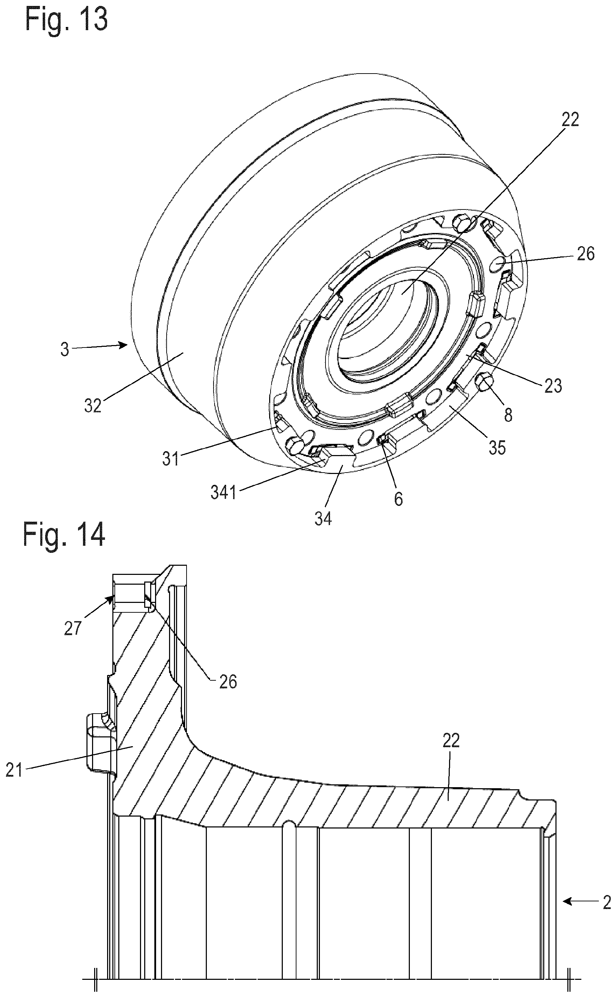

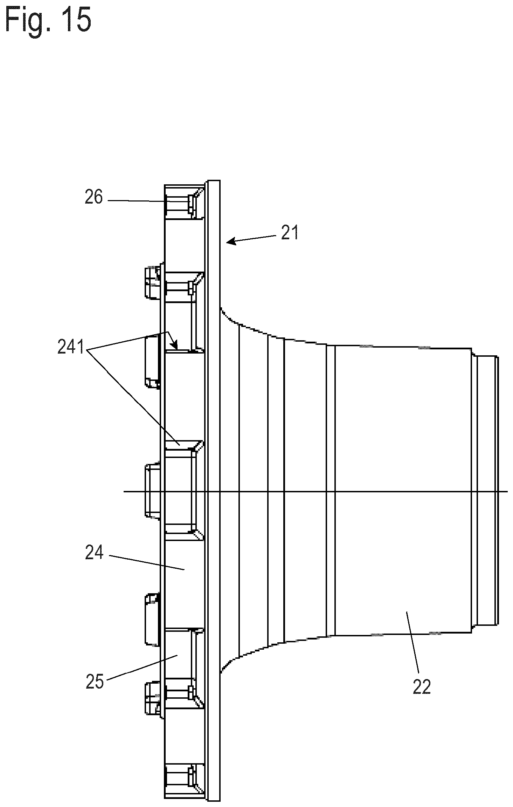

Damit eine Vormontage der Dämpfungselemente 6 auf die Nabe 2 möglich ist und um für die Montage der Bremstrommel 3 auf die Nabe 2 die Dämpfungselemente 6 ortsfest an der Nabe 2 zu sichern, werden diese mittels der Federwirkung der Federarme des federnden Elementen 61 über an ersten Bereichen 63 der federnden Elemente 61 des Dämpfungselement 6 angebrachte Haltenasen 66 durch Einrasten in eine Nut 26, gezeigt in den **Figuren 14** **und** **15****,** an der Nabe 2 ortsfest verspannt.

Der Distanzring 7 dient vorzugsweise auch als Montagehilfe. Mittels vorzugsweise drei Radmuttern 5, die auf die Radbolzen 9 geschraubt werden, wird der Distanzring 7 auf die Bremstrommel 3 geschoben. Dabei werden die Zähne 34 des Bremstrommelflansches 31 in die Zahnlücken bzw. Taschen 25 zwischen den Zähnen 24 der Nabe 2 gepresst. Bei diesem Einpressen werden die verformbaren Elemente 62 der Dämpfungselemente 6 plastifiziert, so dass im Endzustand ein spielfreier Formschluss gebildet wird.

Die Federarme der Dämpfungselemente 6 werden dabei in eine, in die Fläche des Nabenflansches 21 der Nabe 2 eingebrachte, in **Figur 14** gezeigte Vertiefung 27 gedrückt.

Dabei ist zu berücksichtigen, dass das verbleibende Anlagespiel die axiale Wärmeausdehnung der Bremstrommel 3 ausgleichen kann. Alternativ kann die Aussparung auch in den Distanzring 7 eingebracht werden.

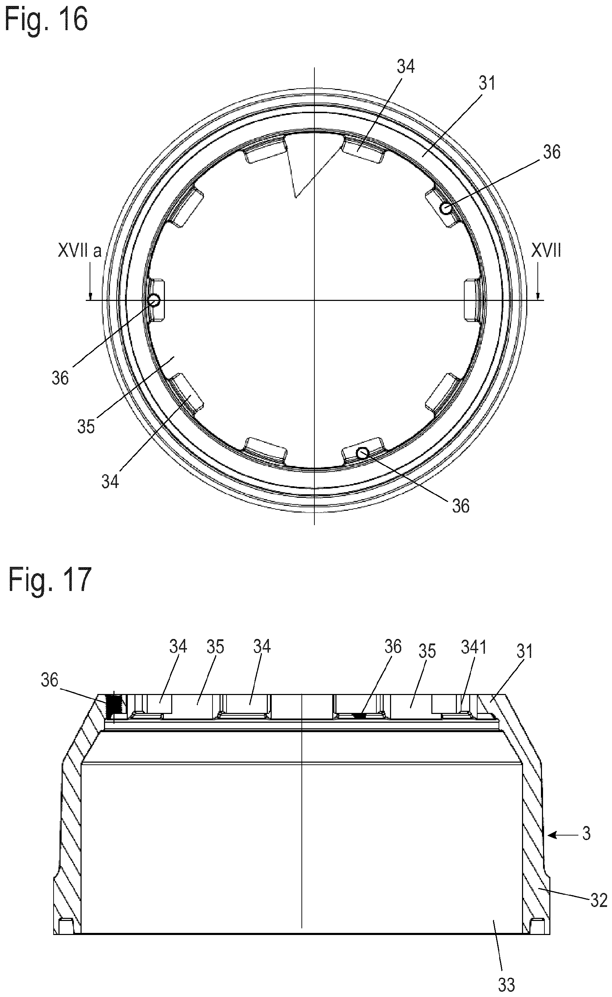

Die Demontage der Bremstrommel 3 von der Nabe 2 erfolgt in einer vorteilhaften Ausführung mittels Abzugsbolzen 8, die in dafür vorgesehene, in den **Figuren 16 und 17** gezeigte Gewindedurchgangsbohrungen 36 in mindestens einer, vorzugsweise jedoch in drei Zähnen 34 der Bremstrommel 3 eingebracht sind.

Dabei werden die Abzugsbolzen 8 lediglich gegen den Steg des Nabenflansches 21 der Nabe 2 geschraubt.

Der Verbindungssteg 64 der Dämpfungselemente 6 dient dabei als mechanischer Schutz für die Nabe 2.

Die Dämpfer Dämpfungselemente 6 werden dabei zerstört. Dies ist gewünscht, da die Federwirkung der Dämpfungselemente 6 nach Demontage nicht mehr gegeben ist.

Alternativ können die Dämpfungselemente 6 als Einzelteil in Form eines geschlossenen Rings (Figuren 7 und 8) ausgeführt werden. In diesem Fall ist die benötigte Vertiefung im Distanzring 7 anzubringen.

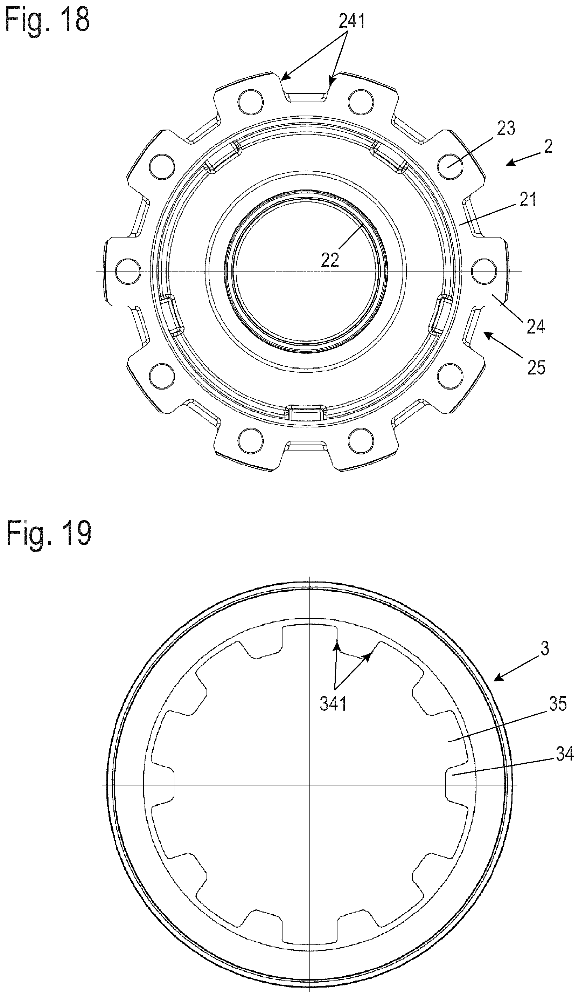

Ebenso alternativ kann die Parallel-Verzahnung der Bremstrommel 3 - Nabe 2 - Schnittstelle auch als V-Verzahnung ausgeführt werden, wie es in den Figuren **18 und 19** dargestellt ist.

Diese Art der Verzahnung bietet den Vorteil, dass die Zähne und Zahnlücken leichter herstellbar sind.

Bei der Parallel-Verzahnung kann je nach Fertigungsverfahren, die materialabtragend zu bearbeitende Aussparung, eine Hinterschneidung bilden. Dies wird durch die V-Verzahnung verhindert.

Im Sinne der Erfindung wird bei dieser Variante allerdings die für das NVH-Verhalten vorteilhafte Reibung an den Zähnen 24, 34 aufgegeben. Der Bauraumgewinn in axialer Richtung bleibt auch bei dieser Ausführungsvariante bestehen.

Der Bauraumgewinn in axialer Richtung bietet einen erheblichen Vorteil in der Gestaltung des Achsendes.

Bei herkömmlichen Bremstrommel/Nabe - Verbindungen wird ein relativ dicker Flansch an der Trommel benötigt, um die Radbolzen-Verbindung darzustellen (in der Regel 15±5 mm). Diese Flanschdicke kann bei den oben beschriebenen Ausführungsvariante an beiden Achsenden annährend komplett eingespart werden.

### Bezugszeichenliste

- 1: Trommelbremse

- 2: Nabe
- 21: Nabenflansch
- 22: Achsaufnahme
- 23: Bohrung
- 24: Zahn
- 241: Seitenflanke
- 25: Tasche
- 26: Aussparung
- 27: Vertiefung

- 3: Bremstrommel
- 31: Bremstrommelflansch
- 32: zylindrischer Teil
- 33: Mantelinnenfläche
- 34: Zahn
- 341: Seitenflanke
- 35: Tasche
- 36: Durchgangsbohrung

- 4: Felge
- 41: Felgenflansch

- 5: Radmutter

- 6: Dämpfungselement
- 61: federndes Element
- 62: plastisches Element
- 63: erster Bereich
- 64: Verbindungssteg
- 65: Lasche
- 66: Haltenase

- 7: Distanzring
- 8: Abzugsbolzen
- 9: Bolzen

- AR: Rotationsachse
- R: Radialrichtung

## Patentansprüche

1. Trommelbremse (1) für ein Nutzfahrzeug, aufweisend
- eine an einer Fahrzeugachse des Nutzfahrzeugs befestigbare Nabe (2),
- eine an der Nabe (2) koaxial zu einer Rotationsachse (AR) der Nabe (2) gelagerte Bremstrommel (3) mit einer als Reibfläche ausgebildeten Mantelinnenfläche (33), an die Bremsbeläge anpressbar sind,
- wobei die Nabe (2) eine zylindrische Achsaufnahme (22) und eine sich von dieser radial erstreckenden Nabenflansch (21) aufweist, an dem ein Bremstrommelflansch (31) der Bremstrommel (3) dreh- und axialfest gelagert ist,
**dadurch gekennzeichnet, dass**
- der Nabenflansch (21) und der Bremstrommelflansch (31) eine formschlüssig ineinandergreifende Verzahnung aufweisen.

2. Trommelbremse (1) nach Anspruch 1, **dadurch gekennzeichnet, dass** der Nabenflansch (21) und der Bremstrommelflansch (31) sich radial zur Rotationsachse (AR) der Nabe (2) erstreckende Zähne (24, 34) aufweisen.

3. Trommelbremse (1) nach Anspruch 1 oder 2, **dadurch gekennzeichnet, dass** einander gegenüberliegende Seitenflanken (241, 341) der einzelnen Zähne (24, 34) des Nabenflansches (21) und des Bremstrommelflansches (31) parallel zueinander ausgerichtet sind.

4. Trommelbremse (1) nach einem der vorstehenden Ansprüche **dadurch gekennzeichnet, dass** axial zur Rotationsachse (AR) der Nabe (2) betrachtete Materialstärken des Bremstrommelflansches (31) und des Nabenflansches (21) gleich sind.

5. Trommelbremse (1) nach einem der vorstehenden Ansprüche **dadurch gekennzeichnet, dass** zwischen Seitenflanken (341) der Zähne (34) des Bremstrommelflansches (3) und Seitenflanken (241) der Zähne (24) des Nabenflansches (2) Dämpfungselemente (6) eingesetzt sind.

6. Trommelbremse (1) nach Anspruch 5, **dadurch gekennzeichnet, dass** die Dämpfungselemente (6) jeweils ein federndes Element (61) und ein plastisch verformbares Element (62) aufweisen.

7. Trommelbremse (1) nach Anspruch 6, **dadurch gekennzeichnet, dass** die verformbaren Elemente (62) parallel zu den Seitenflanken (241, 341) der Zähne (24, 34) verlaufend an parallel zu den Seitenflanken (241, 341) der Zähne (24, 34) verlaufenden ersten Bereichen (63) der federnden Elemente (61) befestigt sind.

8. Trommelbremse (1) nach Anspruch 6 oder 7, **dadurch gekennzeichnet, dass** jedes der federnden Elemente (61) zwei parallel zu den Seitenflanken (241, 341) der Zähne (24, 34) des Bremstrommelflansches (31) verlaufende erste Bereiche (63) und einen die beiden erste Bereiche (63) miteinander verbindenden Verbindungssteg (64) aufweist.

9. Trommelbremse (1) nach Anspruch 6, 7 oder 8, **dadurch gekennzeichnet, dass** jedes der federnden Elemente (61) an den freien Enden der ersten Bereiche (63) eine federnde Lasche (65) aufweist.

10. Trommelbremse (1) nach einem der Ansprüche 6 bis 9, **dadurch gekennzeichnet, dass** an den Seitenflanken (341) der Zähne (34) des Bremstrommelflansches (31) abgewandten Außenseiten der ersten Bereiche (63) Haltenasen (66) vorgesehen sind, die in jeweiligen Aussparungen (26) des Nabenflansches (21) eingreifen.

11. Trommelbremse (1) nach einem der vorstehenden Ansprüche **dadurch gekennzeichnet, dass** zwischen dem Bremstrommelflansch (31) und dem Nabenflansch (21) ein Distanzring (7) angeordnet ist.

12. Trommelbremse (1) nach einem der vorstehenden Ansprüche **dadurch gekennzeichnet, dass** wenigstens ein Zahn (34) des Bremstrommelflansches (31) eine mit einem Gewinde versehene, sich in einer Richtung parallel zur Rotationsachse (AR) der Nabe (2) erstreckende Durchgangsbohrung (36) aufweist.

## Claims

1. Drum brake (1) for a utility vehicle, having
- a hub (2) that can be secured on a vehicle axle of the utility vehicle,
- a brake drum (3) mounted on the hub (2) coaxially to a rotational axis (AR) of the hub (2), having an inner circumferential surface (33) as a friction surface against which brake linings can be pressed,
- wherein the hub (2) has a cylindrical axle bore (22) and a hub flange (21) extending radially therefrom, on which a brake drum flange (31) of the brake drum (3) is mounted in a rotationally and axially secured manner,
**characterized in that**
- the hub flange (21) and the brake drum flange (31) have a positively interlocking tooth system.

2. Drum brake (1) according to claim 1, **characterized in that** the hub flange (21) and the brake drum flange (31) have teeth (24, 34) that extend radially to the rotational axis (AR) of the hub (2).

3. Drum brake (1) according to claim 1 or 2, **characterized in that** opposing side flanks (241, 341) of individual teeth (24, 34) of the hub flange (21) and the brake drum flange (31) are aligned parallel to one another.

4. Drum brake (1) according to any one of the preceding claims, **characterized in that** the material thicknesses of the brake drum flange (31) and the hub flange (21), viewed axially relative to the rotational axis (AR) of the hub (2), are the same.

5. Drum brake (1) according to any one of the preceding claims, **characterized in that** damping elements (6) are inserted between side flanks (341) of the teeth (34) of the brake drum flange (3) and side flanks (241) of the teeth (24) of the hub flange (2).

6. Drum brake (1) according to claim 5, **characterized in that** the damping elements (6) each have a spring element (61) and a plastically deformable element (62).

7. Drum brake (1) according to claim 6, **characterized in that** the deformable elements (62), extending parallel to the side flanks (241, 341) of the teeth (24, 34), are fastened to first regions (63) of the spring elements (61) extending parallel to the side flanks (241, 341) of the teeth (24, 34).

8. Drum brake (1) according to claim 6 or, **characterized in that** each of the spring elements (61) has two first regions (63) extending parallel to the side flanks (241, 341) of the teeth (24, 34) of the brake drum flange (31) and a connecting web (64) connecting the two first regions (63) to one another.

9. Drum brake (1) according to claim 6, 7, or 8, **characterized in that** each of the spring elements (61) has a spring tab (65) at the free ends of the first regions (63).

10. Drum brake (1) according to any one of claims 6 to 9, **characterized in that** retaining lugs (66) are provided on the outer sides of the first regions (63) which face away from side flanks (341) of the teeth (34) of the brake drum flange (31), which retaining lugs engage in respective recesses (26) of the hub flange (21).

11. Drum brake (1) according to any one of the preceding claims, **characterized in that** a spacer ring (7) is arranged between the brake drum flange (31) and the hub flange (21).

12. Drum brake (1) according to any one of the preceding claims, **characterized in that** at least one tooth (34) of the brake drum flange (31) has a through-bore (36), provided with a thread, which extends in a direction parallel to the rotational axis (AR) of the hub (2).

## Revendications

1. Frein à tambour (1), en particulier pour un véhicule utilitaire, présentant
- un moyeu (2) pouvant être fixé à un essieu du véhicule utilitaire,
- un tambour de frein (3) logé au niveau du moyeu (2) coaxialement à un axe de rotation (AR) du moyeu (2) avec une surface intérieure enveloppe (33) formée comme surface de friction, au niveau de laquelle des garnitures de frein peuvent être pressées,
- dans lequel le moyeu (2) présente un logement d'essieu (22) cylindrique et une bride de moyeu (21) s'étendant radialement de celui-ci, au niveau de laquelle une bride (31) du tambour de frein (3) est logée sans pouvoir tourner et de manière fixe axialement,
**caractérisé en ce que**
- la bride de moyeu (21) et la bride de tambour de frein (31) présentent une denture venant en prise l'une dans l'autre par complémentarité de formes.

2. Frein de tambour (1) selon la revendication 1, **caractérisé en ce que** la bride de moyeu (21) et la bride de tambour de frein (31) présentent des dents (24, 34) s'étendant radialement à l'axe de rotation (AR) du moyeu (2).

3. Frein de tambour (1) selon la revendication 1 ou 2, **caractérisé en ce que** des flancs latéraux (241, 341) opposés des dents (24, 34) individuelles de la bride de moyeu (21) et de la bride de tambour de frein (31) sont orientés parallèlement.

4. Frein de tambour (1) selon l'une quelconque des revendications précédentes, **caractérisé en ce que** des épaisseurs de matériau considérées axialement à l'axe de rotation (AR) du moyeu (2) de la bride de tambour de frein (31) et de la bride de moyeu (21) sont identiques.

5. Frein de tambour (1) selon l'une quelconque des revendications précédentes, **caractérisé en ce que** des éléments d'amortissement (6) sont utilisés entre des flancs latéraux (341) des dents (34) de la bride de tambour de frein (3) et des flancs latéraux (241) des dents (24) de la bride de moyeu (2).

6. Frein de tambour (1) selon la revendication 5, **caractérisé en ce que** les éléments d'amortissement (6) présentent respectivement un élément élastique (61) et un élément déformable plastiquement (62).

7. Frein de tambour (1) selon la revendication 6, **caractérisé en ce que** les éléments déformables (62) sont fixés parallèlement aux flancs latéraux (241, 341) des dents (24, 34) s'étendant sur des premières zones (63) s'étendant parallèlement aux flancs latéraux (241, 341) des dents (24, 34) des éléments élastiques (61).

8. Frein de tambour (1) selon la revendication 6 ou 9, **caractérisé en ce que** chacun des éléments élastiques (61) présente deux premières zones (63) s'étendant parallèlement aux flancs latéraux (241, 341) des dents (24, 34) de la bride de tambour de frein (31) et une nervure de liaison (64) reliant les deux premières zones (63) entre elles.

9. Frein de tambour (1) selon la revendication 6, 7 ou 8, **caractérisé en ce que** chacun des éléments élastiques (61) présente sur les extrémités libres des premières zones (63) une languette (65) élastique.

10. Frein de tambour (1) selon l'une quelconque des revendications 6 à 9, **caractérisé en ce que** des côtés extérieurs éloignés au niveau des flancs latéraux (341) des dents (34) de la bride de tambour de frein (31) des premières zones (63), des nez de retenue (66) sont prévus, lesquels s'engagent dans des évidements (26) respectifs de la bride de moyeu (21).

11. Frein de tambour (1) selon l'une quelconque des revendications précédentes, **caractérisé en ce qu'**une bague d'écartement (7) est agencée entre la bride de tambour de frein (31) et la bride de moyeu (21).

12. Frein de tambour (1) selon l'une quelconque des revendications précédentes, **caractérisé en ce qu'**au moins une dent (34) de la bride de tambour de frein (31) présente un perçage traversant (36) pourvu d'un filet, s'étendant dans une direction parallèle à l'axe de rotation (AR) du moyeu (2).
